# EUROPÄISCHE PATENTSCHRIFT

(11) **EP 1 466 776 B1**
(45) Veröffentlichungstag und Bekanntmachung des Hinweises auf die Patenterteilung: **20.09.2006**
(21) Anmeldenummer: 04450083.3
(22) Anmeldetag: 05.04.2004
(51) Int. Cl.: B60K 15/04

(54) **Kraftstofftank**
Filler neck
Embout de remplissage

(30) Priorität: 07.04.2003 AT 5402003
(43) Veröffentlichungstag der Anmeldung: 13.10.2004
(73) Patentinhaber: Alutech Gesellschaft m.b.H., 5651 Lend (AT)
(72) Erfinder: Hake, Till, Dipl.-Ing., 5620 Schwarzach (AT)
(74) Vertreter: Weiser, Andreas

(56) Entgegenhaltungen:
- EP-A- 0 922 602
- EP-A- 0 980 779
- DE-A- 19 745 314
- FR-A- 1 496 616
- US-A- 5 476 185
- US-A- 5 775 357

## Beschreibung

Die vorliegende Erfindung betrifft einen Kraftstofftank aus Metall, insbesondere Aluminium, mit einem in eine Öffnung des Kraftstofftanks mündenden Einfüllstutzen, der zur Gänze aus Metall gefertigt und formschlüssig in der Öffnung verrastet ist.

Bei der Fertigung von Kraftstofftanks aus Metall ist es bekannt, einen ebenfalls aus Metall gefertigten Einfullstutzen mit dem Kraftstofftank zu verschweißen. Dabei besteht die Gefahr, daß sich der Einfüllstutzen verzieht und unrund wird. Dies hat zur Folge, daß sich das zum Ein- oder Aufschrauben des Tankdeckels erforderliche Drehmoment in unzulässigem Maße erhöht. Beispielsweise schreiben heutige Kundenanforderungen für die Bedienung des Tankdeckels eines Kraftstofftanks ein maximales Drehmoment von 0,5 Nm vor, wogegen die genannten Schweißverzüge das Drehmoment auf bis zu 10 Nm anwachsen lassen können.

Es wurde daher bereits vorgeschlagen (siehe z.B. die Schrift FR 1 496 616 A), Einfüllstutzen aus Kunststoff zu verwenden, welche in eine elastische umgebördelte Öffnung des Kraftstofftanks eingepreßt werden und, da der Schweißvorgang entfällt, dabei weitgehend ihre Form behalten. Allerdings erfüllen derartige eingepreßte Kunststoff-Einfüllstutzen nicht die strengen Sicherheitsanforderungen an Kraftstofftanks, da sie keine ausreichende mechanische Festigkeit und Haltbarkeit besitzen. Beispielsweise müssen Kraftstofftanks für Lastkraftwagen nach dem sog. "USA-drop-test" einen Aufprall aus 9 m Höhe unbeschadet überstehen, ohne daß der Tankdeckel vom Einfüllstutzen abspringt. Dies ist mit ausschließlich aus Kunststoff gefertigten, in eine elastische Öffnung eingepreßten Einfüllstutzen nicht machbar.

In der DE 197 45 314 A1 wurden daher auch metallverstärkte Kunststoff-Einfüllstutzen vorgeschlagen, bei welchen in einen zylindrischen Grundkörper aus Kunststoff ein zylindrischer Einsatz aus Blech eingeschraubt oder beim Kunststoff-Spritzgießen des Grundkörpers mit eingebettet wird. Beide Varianten sind in der Fertigung ausgesprochen aufwendig.

Schließlich ist aus der EP 0 980 779 A ein Einfüllstutzen der eingangs genannte Art bekannt, welcher aus Aluminium gefertigt ist und mittels Bajonettverschluß-Rampen befestigt wird. Ein Verriegelungsring wird aufgesteckt und greift mit Zähnen in die Bajonettöffnungen ein, um den Einfüllstutzens gegen Verdrehen zu sichern. Dadurch besteht zwar keine Gefahr eines Schweißverzuges und die Metallfertigung gewährleistet hohe Formstabilität im Betrieb, allerdings besteht durch den Verriegelungsring die Gefahr des Einleitens von Radialkräften in den Einfüllstutzen bzw. die Tanköffnung, was zu einem Verziehen und damit Abspringen des Tankdeckels unter extremen Bedingungen, wie dem genannten "USA-drop-test", führen kann.

Die Erfindung setzt sich zum Ziel, einen Kraftstofftank zu schaffen, welcher einen verzugsfreien und formstabilen Einfüllstutzen besitzt, an dem ein Tankdeckel leichtgängig und sicher verankert werden kann, und der überdies einfacher zu fertigen ist als die bekannten Konstruktionen. Dies wird mit einem Kraftstofftank der einleitend genannten Art erreicht, der sich erfindungsgemäß dadurch auszeichnet, daß der Einfüllstutzen einen Umfangsflansch zur Anlage an der Außenseite des Kraftstofftanks und Federzungen zur Anlage an der Innenseite des Kraftstofftanks aufweist.

Auf diese Weise ist die Wandung des Tanks zwischen Umfangsflansch und Federzungen festgelegt, ohne daß Kräfte in Radialrichtung in den Einfüllstutzen eingeleitet werden, welche diesen verziehen könnten. Die Gefahr eines Abspringens des Tankdeckels unter extremen Bedingungen, wie dem genannten "USA-drop-test", ist damit weitgehend ausgeschlossen.

In jedem Fall ist es besonders günstig, wenn der Umfangsflansch das Ende des Einfüllstutzens bildet. Dadurch ragt der Einfüllstutzen nur minimal über die Tankaußenseite vor, was nicht nur der Platzeinsparung dient, sondern auch erhöhten mechanischen Schutz verleiht.

Gemaß einer weiteren bevorzugten Variante der Erfindung wird vorgesehen, zwischen Umfangsflansch und Außenseite des Kraftstofftanks eine Dichtung zwischenzulegen. Durch Anordnung der Dichtung in diesem Bereich ist diese vor einem Angriff durch den im Tank enthaltenen Kraftstoff weitgehend geschützt, was ihre Lebensdauer erhöht.

Die erfindungsgemäße Konstruktion eignet sich besonders für den Einsatz weiterer Optionen, wie einer Füllstandsbegrenzung, indem der Einfüllstutzen in den Innenraum des Kraftstofftanks hineinragt; einer Sieboption, indem der Einfüllstutzen an seinem Innenumfang mit Befestigungen für einen Siebhalter und/oder ein Sieb ausgestattet ist; und/oder einer Bleifreiklappenfunktion, indem der Einfüllstutzen eine federbelastete Rückschlagklappe aufweist.

Besonders bevorzugt wird bei einem Kraftstofftank aus Aluminium vorgesehen, daß auch der Einfüllstutzen aus Aluminium gefertigt ist, was eine ausgezeichnete thermische Anpassung, geringes Gewicht und hohe Festigkeit ergibt.

Die Erfindung wird nachstehend anhand von in den Zeichnungen dargestellten Ausführungsbeispielen näher erläutert. In den Zeichnungen zeigt
Fig. 1 eine Ausführungsform des Kraftstofftanks der Erfindung ausschnittsweise im Schnitt und
Fig. 2 eine Ausführungsform eines Kraftstofftanks ausschnittsweise in einem zur Hälfte um 90° gedrehten Schnitt.

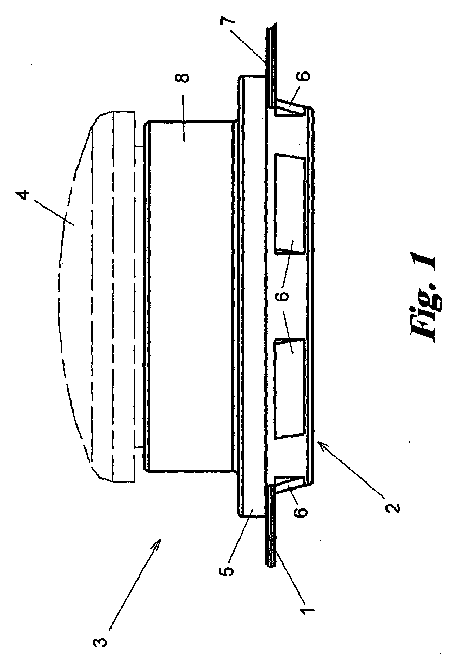

In Fig. 1 ist ein erfindungsgemäßer Kraftstofftank 1 ausschnittsweise im Schnitt gezeigt, genauer gesagt jener Ausschnitt seiner Wandung, welcher eine Öffnung 2 aufweist, in die ein Einfüllstutzen 3 einmündet. Der Einfüllstutzen 3 kann mit Hilfe eines Tankdeckels 4 verschlossen werden, welcher im gezeigten Beispiel in ein (nicht näher dargestelltes) Innengewinde des Einfüllstutzens 3 eingeschraubt wird. Alternativ könnte der Tankdeckel 3 auch auf ein Außengewinde aufgeschraubt oder sonstwie am Einfüllstutzen 3 lösbar verankert werden.

Der Kraftstofftank 1 ist aus Metall gefertigt, bevorzugt aus Aluminium. Ebenso ist der Einfüllstutzen 3 zur Gänze aus Metall gefertigt, bevorzugt einstückig, besonders bevorzugt aus Aluminium.

Die Montage des Einfüllstutzens 3 am Kraftstofftank 1 erfolgt durch formschlüssige Verrastung in der Öffnung 2. Zu diesem Zweck weist der Einfüllstutzen 3 einen Umfangsflansch 5 auf, welcher an der Außenseite des Kraftstofftanks 1 zur Anlage kommt, sowie Federzungen 6, welche im gespreizten bzw. eingerasteten Zustand von Fig. 1 die Öffnung 2 hintergreifen und an der Innenseite des Kraftstofftanks 1 zur Anlage kommen. Die Wandung des Kraftstofftanks 1 ist somit zwischen Außenflansch 5 und Federzungen 6 festgelegt, ohne radiale Kräfte auf den Einfüllstutzen 3 aufzubringen. Dabei kann zwischen Umfangsflansch 5 und Außenseite des Kraftstofftanks 1 eine Dichtung 7 zwischengelegt sein.

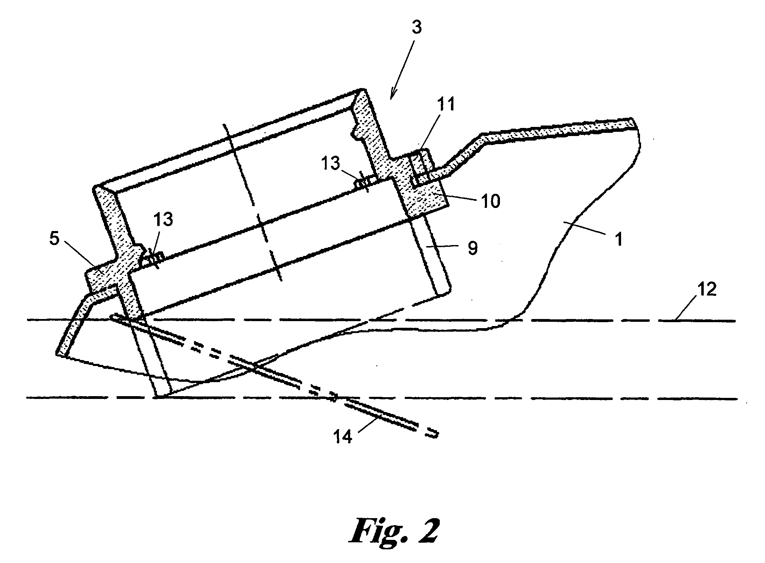

Der Einfüllstutzen 3 kann nach außen über den Umfangsflansch 5 verlängert sein, wie bei 8 angedeutet, oder außenseitig am Umfangsflansch 5 enden, um nicht über die Außenseite des Kraftstofftanks vorzustehen. Der Einfüllstutzen 3 kann auch nach innen über die Federzungen 6 hinaus verlängert sein (siehe 9 in Fig. 2).

In Fig. 2 ist eine Ausführungsform eines Kraftstofftanks 1 gezeigt, in welcher der Formschluß zwischen Einfüllstutzen 3 und Wandung des Kraftstofftanks 1 mit Hilfe eines Bajonettverschlusses erreicht wird. Zu diesem Zweck ist der Einfüllstutzen 3 wieder mit einem Umfangsflansch 5 zur Anlage an der Außenseite des Kraftstofftanks versehen, diesmal aber mit Bajonettverschluß-Rampen 10 (rechte Hälfte des Schnitts von Fig. 2) zur Anlage an der Innenseite des Kraftstofftanks 1. Die Bajonettverschluß-Rampen 10 treten beim Einsetzen des Einfüllstutzens 3 in axialer Richtung in die Öffnung 2 durch entsprechende Aussparungen der Öffnung 2 hindurch und werden durch Verdrehen des Einfüllstutzens 3 unter dem Rand der Öffnung 2 verriegelt, wie in der Technik bekannt. Der Einfüllstutzen 3 kann in dieser verriegelten Stellung mit Hilfe eines Stiftes oder einer Sperrklinke 11 gegen ein Verdrehen in der Öffnung 2 gesichert werden.

Wie Fig. 2 zeigt, kann der Einfüllstutzen 3 zwecks Begrenzung des Füllstandes des Kraftstofftanks 1 auf das Niveau 12 in den Innenraum des Kraftstofftanks 1 hineinragen (9). Ferner kann der Einfüllstutzen 3 an seinem Innenumfang mit Befestigungen 13 für die Anbringung eines Siebhalters oder Siebes (nicht gezeigt) sowie an seinem unteren Ende mit einer federbelasteten Rückschlagklappe 14 ausgestattet sein. Die Rückschlagklappe 14 verschließt im Ruhezustand das untere Ende des Einfüllstutzens 3 und verhindert das Einfüllen von Kraftstoff. Nur durch Aufstoßen der Rückschlagklappe 14, z.B. durch Einführen des Füllrohres einer Zapfpistole, kann Kraftstoff in den Kraftstofftank 1 eingebracht werden.

Die Erfindung umfaßt alle Varianten und Modifikationen, die in den Rahmen der angeschlossenen Ansprüche fallen.

## Patentansprüche

1. Kraftstofftank (1) aus Metall, insbesondere Aluminium, mit einem in eine Öffnung (2) des Kraftstofftanks (1) mündenden Einfüllstutzen (3), der zur Gänze aus Metall gefertigt und formschlüssig in der Öffnung (2) verrastet ist, **dadurch gekennzeichnet, daß** der Einfüllstutzen (3) einen Umfangsflansch (5) zur Anlage an der Außenseite des Kraftstofftanks (1) und Federzungen (6) zur Anlage an der Innenseite des Kraftstofftanks (1) aufweist.

2. Kraftstofftank nach Anspruch 1, **dadurch gekennzeichnet, daß** der Umfangsflansch (5) das Ende des Einfüllstutzens (3) bildet.

3. Kraftstofftank nach Anspruch 1 oder 2, **dadurch gekennzeichnet, daß** zwischen Umfangsflansch (5) und Außenseite des Kraftstotttanks (1) eine dichtung (7) zwischengelegt ist.

4. Kraftstofftank nach einem der Ansprüche 1 bis 3, **dadurch gekennzeichnet, daß** der Einfüllstutzen (3) zwecks Füllstandsbegrenzung in den Innenraum des Kraftstofftanks (1) hineinragt.

5. Kraftstofftank nach einem der Ansprüche 1 bis 4, **dadurch gekennzeichnet, daß** der Einfüllstutzen (3) an seinem Innenumfang mit Befestigungen (13) für einen Siebhalter und/oder ein Sieb ausgestattet ist.

6. Kraftstofftank nach einem der Ansprüche 1 bis 5, **dadurch gekennzeichnet, daß** der Einfüllstutzen (3) eine federbelastete Rückschlagklappe (14) aufweist.

7. Kraftstofftank nach einem der Ansprüche 1 bis 6 aus Aluminium, **dadurch gekennzeichnet, daß** der Einfüllstutzen (3) aus Aluminium gefertigt ist.

## Claims

1. A fuel tank (1) of metal, in particular aluminium, having a filler neck (3) leading into an opening (2) of the fuel tank (1), which filler neck (3) is made entirely of metal and is locked in form-fitting manner in the opening (2), **characterised in that** the filler neck (3) comprises a circumferential flange (5) for resting again the outside of the fuel tank (1) and flexible tongues (6) for resting against the inside of the fuel tank (1).

2. A fuel tank according to claim 1, **characterised in that** the circumferential flange (5) forms the end of the filler neck (3).

3. A fuel tank according to claim 1 or claim 2, **characterised in that** a seal (7) is interposed between the circumferential flange (5) and the outside of the fuel tank (1).

4. A fuel tank according to any one of claims 1 to 3, **characterised in that** the filler neck (3) projects into the interior of the fuel tank (1) for the purpose of limiting the filling level.

5. A fuel tank according to any one of claims 1 to 4, **characterised in that** the filler neck (3) is provided at its inner circumference with fastenings (13) for a screen holder and/or a screen.

6. A fuel tank according to any one of claims 1 to 5, **characterised in that** the filler neck (3) comprises a spring-loaded non-return valve (14).

7. A fuel tank according to any one of claims 1 to 6 of aluminium, **characterised in that** the filler neck (3) is made of aluminium.

## Revendications

1. Réservoir de carburant (1) réalisé en métal, en particulier en aluminium, avec un embout de remplissage (3) débouchant dans une ouverture (2) du réservoir de carburant (1), embout de remplissage qui est réalisé entièrement en métal et s'encliquette par engagement positif dans l'ouverture (2), **caractérisé en ce que** l'embout de remplissage (3) présente une collerette périphérique (5) pour l'application sur le côté extérieur du réservoir de carburant (1) et des languettes élastiques (6) pour l'application sur le côté intérieur du réservoir de carburant (1).

2. Réservoir de carburant selon la revendication 1, **caractérisé en ce que** la collerette périphérique (5) forme l'extrémité de l'embout de remplissage (3).

3. Réservoir de carburant selon la revendication 1 ou 2, **caractérisé en ce qu'**entre la collerette périphérique (5) et le côté extérieur du réservoir du carburant (1), est intercalé un joint d'étanchéité (7).

4. Réservoir de carburant selon l'une des revendications 1 à 3, **caractérisé en ce que** l'embout de remplissage (3) fait saillie à l'intérieur du réservoir de carburant (1) pour la limitation du niveau de remplissage.

5. Réservoir de carburant selon l'une des revendications 1 à 4, **caractérisé en ce que** l'embout de remplissage (3) est muni, sur sa périphérie interne, de fixations (13) pour un support de filtre et/ou un filtre.

6. Réservoir de carburant selon l'une des revendications 1 à 5, **caractérisé en ce que** l'embout de remplissage (3) présente un clapet anti-retour (14) précontraint par ressort.

7. Réservoir de carburant selon l'une des revendications 1 à 6, réalisé en aluminium, **caractérisé en ce que** l'embout de remplissage (3) est réalisé en aluminium.
